# EUROPEAN PATENT APPLICATION

(11) **EP 0 679 529 A1**
(43) Date of publication of application: **02.11.1995**
(21) Application number: 95106389.0
(22) Date of filing: 27.04.1995
(51) Int. Cl.: B41M 3/14, C09D 11/00

(54) **Tamperproof ink**

(30) Priority: 27.04.1994 GB 9408342
(71) Applicant: WILLETT INTERNATIONAL LIMITED, Corby, Northants. NN18 8AQ (GB)
(72) Inventor: Lyon, Peter John, Market Harborough, Leicestershire (GB); O'Dell, Rachel Margaret, Rushden, Northants, NN10 9JQ (GB)
(74) Representative: Dummett, Thomas Ian Peter

(57) **Abstract**

The present invention relates to a method for enhancing the integrity of a document by applying an image to that document which is resistant to erasure of the applied image, which method comprises forming the image by applying a composition which contrasts with that portion of the document to which it is applied, characterised in that:
a. one or more ink compositions containing a pigment and a dyestuff, preferably in combination with one another in an oil or oil based carrier medium, are applied to the document to form an image on the document; and
b. at least part of the pigment component of the composition is allowed to be absorbed into the material of the document and thereby form a surface image and an absorbed underlying image.

The invention also relates to an ink composition for use in the method of the invention and to a document printed using the method of the invention.

## Description

The present invention relates to a method and composition, notably to a method for enhancing the security of written or printed documents and to an ink composition for use therein.

### BACKGROUND TO THE INVENTION:

Many documents, for example cheques, bearer bonds, identity papers, legal documents and passports, carry words and/or signatures which identify the person to whom that document relates and/or the cash value of the document. If those documents fall into the wrong hands, the printed or written portions of the document can with comparative ease be erased or amended so that the document appears to relate to a different person or to have a different face value. Problems also exist with the cancellation or over printing of stamps, cheques, bearer bonds or other documents to show that they have been redeemed or used, where erasure of the overprinting or cancellation may render the document suitable for re-use. Frequently, the value of such a document is or can be made to appear high and such erasure or amendment is becoming a major problem in many countries.

Typically, the name or amount on such documents is either written in, for example as the signature on a cheque, or is typed or printed on, for example as the amount on a bearer bond or the personal details of the person to whom a passport relates, by way of an addition or insertion in an otherwise standard printed document. Such additions can be removed from the document by careful removal of the surface of the paper of the page carrying the additions, or by chemically bleaching or dissolving the ink forming the characters on the paper, for example dyestuff images can removed by treatment with acidified potassium permanganate.

For convenience, the term document will be used herein to denote in general a single sheet which either forms the whole document, as with a postage stamp, cheque or bearer bond, or forms a part of a larger document, as with a page in a passport. The document can be made from a wide range of materials, but will usually be made from paper, which may be a laminate of a sheet or sheets of paper with other materials, for example plastic sheet overlayers. For convenience the invention will be described hereinafter in terms of a single sheet of paper onto which a signature and/or numerical amount is to be inserted.

Many attempts have been made to prevent such unauthorised amendment of a document, for example by applying a plastic security sheet as an overlayer overlying the signature etc. characterising the identity and/or value of the document. However, many of such proposals are expensive and often cannot be applied to certain types of document, for example a plastic overlayer cannot practically be applied to a personal cheque.

It has been proposed to use an ink comprising a pigment, for example carbon black, in an oil based carrier medium which is absorbed into the paper of the document to form an indelible signature or other image in the paper. Since the pigment is carried with the oil as the latter is absorbed into the paper, the image cannot be erased merely by bleaching or other treatment. The image cannot be physically be removed by scraping away the surface of the paper since the depth of penetration of the pigment requires the removal of so much paper that the erasure is immediately visible. However, we have found that the use of such oil based inks presents other problems in that the oil continues to migrate within the paper causing the image to spread and blur so that it becomes indecipherable with time. Furthermore, the spreading of the a pigment reduces the intensity of the image which is perceived at the surface of the paper and this may prevent the image being detected by an optical or other scanning device. It is then necessary for an operator to inspect each document visually to assess the residual image, which is cumbersome and impractical where many documents have to be inspected, for example in an automated cheque scanning system.

We have found that the above problems can be reduced by the use of an ink which contains both a dyestuff to form a surface image on the document and a pigment which is absorbed with the water or oil carrier medium of the ink into the document to form an underlying image within the paper or other structure of the document. It would have been expected that the fluid dyestuff would have migrated more readily that the solid pigment and that the resultant image would have been more blurred and spread that where solely a pigment was present. Surprisingly, we have found that this does not occur and a sharp surface image is formed which can readily be machine scanned and an underlying absorbed image is formed which resists removal by scraping away the surface of the document or chemical bleaching of the image and which remains readable with the passage of time.

### SUMMARY OF THE INVENTION:

Accordingly, the present invention provides a method for enhancing the integrity of a document by applying an image to that document which is resistant to erasure of the applied image, which method comprises forming the image by applying a composition which contrasts with that portion of the document to which it is applied, characterised in that:
a. one or more ink compositions containing a pigment, preferably a bleach resistant pigment, in an aqueous, oil or oil based carrier and a dyestuff, preferably a carbon black pigment in combination with an oil soluble or dispersable dyestuff in an oil or oil based carrier medium, are applied to the document to form an image on the document; and
b. at least part of the pigment component of the composition is allowed to be absorbed into the material of the document and thereby form a surface image and an underlying absorbed image.

We believe that the underlying image is formed by the pigment and that the surface image is formed from the dyestuff and that migration of the surface image may be reduced by some form of bonding between the pigment and the dyestuff.

The method of the invention can be carried out by applying one ink containing the pigment and another ink containing the dyestuff to form overlying images on the document. However, this may raise problems with ensuring accurate registration of the images formed with the two inks and it is preferred to apply a single ink composition containing both the pigment and the dyestuff in a common aqueous, oil or oil based carrier medium.

We believe that such combination ink compositions are novel and the invention therefore also provides an ink composition, characterised in that the composition comprises:
a. at least one pigment, preferably a bleach resistant pigment;
b. at least one dyestuff, preferably an aqueous or oil soluble or dispersible dyestuff; and
c. an aqueous, oil or oil based carrier for the pigment and dyestuff.

The invention also provides a document when printed with an ink composition containing a pigment and a dyestuff, preferably in an oil or oil based carrier medium, to form an image on the document, characterised in that at least part of the pigment content of the printed image is absorbed into the material of the document.

The use of a pigment which is bleach resistant and which contrasts with the surface of the document to which it is applied reduces many of the erasure and/or removal problems encountered with a conventional dyestuff based ink composition. The pigment is carried with the carrier medium, notably an oil or oil based carrier medium, as the latter is absorbed into the material of the document and the absorbed pigment is largely unaffected by attempts to remove the pigment mechanically and/or chemically. The dyestuff gives an intense surface image which is desirable for a good visual image, and as indicated above, the dyestuff surprisingly does not spread upon the surface of the document or get absorbed into the document to form a diffuse and blurred image. Although the surface dyestuff image is susceptible to chemical erasure, the underlying pigment image provides a persistent image which can be identified, thus preserving the integrity of the document against fraudulent entry of new data to replace the original image.

Preferably, the pigment for use in the present invention is a carbon black pigment, or an oil soluble or dispersible resin, for example an alkyd resin, carrying a carbon black pigment dispersed therein. However, other pigments can be used if they are resistant to bleaching, that is are resistant to decolourisation by treatment with an oxidising agent, such as aqueous hypochlorite solution, so that the image cannot readily be rendered non-visible by treatment with the oxidising agent. The pigment is preferably one which contrasts strongly with the surface of the document to which it is applied, for example by being a dark colour for application to a white paper, or by being a contrasting colour, for example a red, green or yellow pigment such as chrome yellow or malachite green. However, the pigment may be one which is substantially non-visible to the naked eye but which can be detected by other means. Thus, for example, the pigment can be a ferric oxide pigment which can be detected electromagnetically or a titanium dioxide pigment which may be almost non-visible against the white background of a paper but which can be made visible by exposure to UV radiation. If desired, mixtures of pigments may be used, as when a coloured pigment is used to give a visual image in conjunction with a substantially non-visible pigment which can be made visible under UV radiation.

The use of a carbon black pigment dispersed in a resin carrier compatible with the preferred oil carriers for the composition is especially preferred.

The dyestuff for present use in one which is soluble or dispersible in the carrier for the ink composition in which it is applied. As indicated above, it is preferred to incorporate both the pigment and the dyestuff in the same ink composition and the dyestuff should therefore be compatible with the pigment and its resin carrier (where used) so that a substantially homogeneous composition can be formed. Suitable dyestuffs also contrast with the colour of the document to which they are to be applied so that the image formed by the dyestuff is inherently prominently visible in the document or can be rendered visible under suitable light or radiation. A particularly preferred dyestuff is Nigrosine black, notably in an oil or oil compatible carrier.

Part or all of the image forming components can be a non-visible material, for example a UV or other fluorescent or photoluminescent pigment and/or dyestuff or a ferromagnetic pigment such a ferric oxide which can be detected electronically. This is of especial advantage, since a person may remove the image until all the visible components have been removed, but fail to remove residual non-visible fluorescent and/or photoluminescent components. These residues can still be detected under UV or other radiation and thus enable unauthorised amendment of the document to be detected visually or by the use of a suitable electro-optical detector. The terms pigment and dyestuff are therefore used herein to denote materials which form an image which is inherently visible against the background of the surface of the document or can be detected by other means, for example by being rendered visible under suitable light or radiation.

The ink composition can be an aqueous based composition and may contain co-solvents or bridging materials to aid dissolution of the dyestuff or suspension of the pigment. However, it is particularly preferred to use an oil or oil based carrier for the ink composition since this aids absorption of the pigment component of the ink into the document. The dyestuff is therefore preferably an oil soluble or dispersible dyestuff and the pigment is oleophilic or has its surface rendered oleophilic, for example by milling the pigment with an oil, prior to its incorporation into the ink composition.

The oil or oil based carrier can be selected from a wide range of such carriers which have the property of being absorbed into the material of the document, and the term oil or oil based material is used herein to denote in general oleaginous materials which are not readily wet by water and which more readily wet the material of the document than water. Thus, the oil can be a natural or synthetic vegetable or mineral oil, for example an hydrocarbon or paraffin oil; or can be an oleaginous organic long chain alkanol or an ester or fatty acid, for example a saturated or unsaturated mono- or di-carboxylic acid containing at least 8 carbon atoms, for example sebacic, erucic, brassylic, lauric, oleic, stearic, palmitic or behenic acids or alkyl esters thereof, for example dibutyl sebacate or glycerol mono-di- and tri-esters of oleic, stearic or palmitic acids. If desired, mixtures of oils may be used, as when a solution or dispersion of the dyestuff or pigment in dibutyl sebacate or oleic acid is used to provide one of the other ingredients of the composition. In order to minimise the formation of a surface oily deposit on the document, it is preferred that the oil used should not be a drying oil and that the oil carrier should have a viscosity of less than 25 Cps at 60°C.

The ink composition may contain other ingredients which assist penetration of the ink into the document, for example oil compatible surfactants, viscosity modifiers and UV or other stabilizers; or as indicated above, cosolvents or bridging fluids which assist suspension of the dyestuff or pigment in the carrier medium or enhance the stability of such suspensions once formed. The composition may also contain or other ingredients which enhance the utility of the image, for example marker ingredients such as IR absorbers which absorb IR radiation at characteristic wavelengths, which enable an operator to detect whether the image has been printed with an ink from an authorised source or whether a counterfeit ink has been used, thus indicating an attempt to counterfeit the document.

The ink composition can contain the essential pigment, dyestuff and oil or oil based carrier medium in any desired proportions having regard to the use to which the image is to be put and the intensity of the image which is desired for that end use. Typically, it will be desired that the surface and absorbed pigment image should provide an image which can be scanned optically using a conventional optical or electro-optical scanning device. To this end it is preferred that the printed image provide a sharp contrast with the background of the document upon which it is printed.

This is achieved by ensuring that adequate image forming components are present in the ink composition. Typically, the total of pigment and dyestuff will be at least 5%, preferably at least 10%, by weight of the total composition and the aqueous, oil or oil based carrier will provide substantially the remainder of the ink composition. It is particularly preferred that the pigment be present in an amount of at least 2.5%, notably 3 to 7.5%, by weight of the total ink composition to provide an adequate absorbed image; and that the dyestuff be present in an amount of at least 5%, preferably from 7.5 to 15%, by weight of the total ink composition to provide an adequate surface image. The oil or oil based carrier is typically present in at least 50% by weight of the total ink composition, notably from 70 to 90%.

The ink compositions of the invention can be made by any suitable technique, for example by mixing together the required ingredients, optionally with high shear working or in a ball mill or the like. If desired, some of the ingredients can be admixed separately to form a premix into which others of the ingredients are admixed. If desired, the pigment can be milled with some or all of the oil or oil based carrier to ensure intimate admixture of the solid particles with the carrier. This may assist stabilisation of the suspension of the pigment in the overall ink composition.

The image can be applied by any suitable method, for example manually in the case of a signature, by ink jet or other printing techniques in the case of alphanumeric images, bar codes, dots or pictorial images, or by ink stampers in the case of cancellation stamps. The invention can thus be carried out using existing writing, typing or printing techniques to apply the ink composition without the need for any significant modification of the application technique. However, it may be desired to apply the ink composition at an elevated temperature, for example from 50 to 75°C, so as to reduce the vicscosity of the ink as applied to a value of less than 25 Cps, preferably less than 20 Cps. Thus, it will usually be preferred that the ink have a viscosity of less than 20 Cps at 60°C. The increase in viscosity of the absorbed carrier medium as it cools to the ambient temperature of the document may also assist reduction in the spreading of the pigment image within the material of the document.

As stated above, the invention can be applied to a wide range of documents, provided that the nature of the paper or other material from which the document is made readily absorbs the oil carrier and the pigment applied to it. Thus, the document can be made from a conventional paper, which may be treated in the area to which the image is to be applied to enhance the absorption of the ink in this area of the document. For example, the area to which the image is to be applied can be rendered oleophillic. Alternatively, the surface layer of the document can be less absorbent than the underlying layer(s) so that the image does not spread significantly in this surface layer, but spreads in the underlying layer(s). This enables a sharp image to be formed in the surface layer, aiding reading of the image, with an underlying diffused image which is difficult to erase or remove.

The invention can be applied to a wide range of documents, for example cheques, bearer bonds, passports, etc. to assist the detection of attempts to alter the document by erasure or alteration of the image. However, the invention finds use in other areas where it is desired to provide a permanent image which resists removal, yet can be readily machine scanned or scanned by an operator if the surface on which the image is formed becomes damaged. Thus, the invention can be applied to the printing of identification codes on letters, for example post code identification, bar codes on packages and the like where the surface image provides the primary identification, but the absorbed pigment image provides a secondary identification if the surface image is damaged.

The image applied to the document can have a predetermined shape or form and can be applied to a selected position on the document so that the image can be mechanically, electronically or optically detected. The image is a typically a signature or one or more alphanumeric characters. However, the invention may also be applied to the formation of pictorial or other images. The position of the image on the document is preferably also selected, in that the image is formed at a specific position or positions on the face of the document, typically in a space in a pre-printed document. However, in the case of cancellation images applied by stamp printers or the like, the position of the cancellation image may not be accurately located provided that it extends at least in part over that portion of the document which is to display the cancellation image.

The invention will now be illustrated by the following examples in which all parts and percentages are given by weight unless stated otherwise:

### Example 1:

An ink composition was made by mixing 35 parts by weight of Nigrosine Black Dye with 65 parts by weight of oleic acid. 42 parts by weight of this mixture were mixed using high shear stirring with 58 parts by weight of dibutyl sebacate to give an oil based composition.

10 parts by weight of the dispersion sold under the Trade Mark DBL 25 (containing 5 parts of carbon black pigment in 5 parts of an alkyd resin) and 15 parts dibutyl sebacate were added to the above composition with high shear mixing to form an ink composition. The ink composition was filtered through a Pall Profile capsule filter to remove particles greater than 3 micrometres. The filtered ink composition contained 11.8% of the dyestuff, 4% of the carbon black and 80.2% of the oil carriers. The ink had a viscosity of 13 Cps at 60°C.

This ink composition was applied at a temperature of about 60°C through an impulse jet ink jet printer head onto a paper blank cheque form to form alphanumeric characters at required positions on the cheque form. The image was an intense black series of numbers on the surface of the paper which were sharply defined and could readily be read by an optical scanner. However, the particles of the carbon black pigment were carried into the underlying layers of the paper by the oil carrier as the latter was absorbed into the paper so that at least part of the printed image was located within the material of the paper.

However, the surface layer of the image could be removed by treatment with acidified potassium permanganate. This exposed the underlying carbon black pigment image which was clearly visible and could not be removed by further chemical treatment. An attempt to remove the paper impregnated with the carbon black pigment left clear evidence of tampering.

By way of contrast, when an ink composition formulated as above but omitting the carbon black pigment was applied to the cheque blank, the dyestuff image could be removed to leave a blank cheque which could have new figures applied to it to increase the face value of the cheque and the image tended to spread and become blurred with time.

By way of further contrast, when an ink composition formulated with the carbon black but omitting the dyestuff was applied to the cheque blank, the pigment image readily absorbed into the paper to give a slightly blurred image which could not be successfully read consistently using an optical scanner. With time, the image became fainter and more diffuse and could not be scanned successfully.

### Example 2:

An ink composition was prepared as in Example 1 using DBL 25 (13 parts), dibutyl sebacate (26 parts) and 61 parts of the dispersion of Example 1 to give an overall ink composition of dyestuff 7.7%, carbon black pigment 6.5% and oil carrier 85.8%. The viscosity of the ink was 13 Cps at 60°C. The ink was applied to a blank cheque form and gave similar results to those in Example 1.

## Claims

1. An ink composition, characterised in that the composition comprises:
a. at least one pigment;
b. at least one dyestuff; and
c. an aqueous, oil or oil based carrier medium for the pigment and dyestuff.

2. A document when printed with an ink composition containing a pigment in an aqueous, oil or oil based carrier and a dyestuff to form an image on the document, characterised in that at least part of the pigment content of the printed image is absorbed into the material of the document.

3. A method for enhancing the integrity of a document by applying an image to that document which is resistant to erasure of the applied image, which method comprises forming the image by applying a composition which contrasts with that portion of the document to which it is applied, characterised in that:
a. one or more ink compositions containing a pigment and a dyestuff in an aqueous, oil or oil based carrier are applied to the document to form an image on the document; and
b. at least part of the pigment component of the composition is allowed to be absorbed into the material of the document and thereby form a surface image and an absorbed underlying image.

4. A method as claimed in claim 3, characterised in that the dyestuff and pigment are applied together to the document in an ink composition as claimed in claim 1.

5. A composition, document or method as claimed in any one of the preceding claims, characterised in that the carrier for the ink composition is an oil or oil based carrier.

6. A composition, document or method as claimed in any one of the preceding claims, characterised in that the ink composition comprises a total of at least 5% by weight of the dyestuff and pigment.

7. A composition, document or method as claimed in any one of the preceding claims, characterised in that the ink composition comprises at least 2.5% by weight of the pigment, at least 5% by weight of the dyestuff and at least 50% by weight of an oil or oil based carrier medium.

8. A composition, document or method as claimed in any one of the preceding claims, characterised in that the dyestuff and/or pigment provides an image which is inherently visible, can be made visible under UV or other radiation or which can be detected using electromagnetic means.

9. A composition, document or method as claimed in any one of the preceding claims, characterised in that the ink composition comprises a marker ingredient whereby the image formed from the ink can be scanned to identify whether the image has been formed from an authorised ink or not.

10. A composition, document or method as claimed in any one of the preceding claims, characterised in that the pigment is a carbon black pigment.

11. A method as claimed in claim 3, characterised in that the ink composition is applied at a temperature in the range 50 to 75°C.
